Europäisches Patentamt

European Patent Office

Office européen des brevets

(19)

(11) Numéro de publication: **0 153 201**
A2

# (12) DEMANDE DE BREVET EUROPEEN

(21) Numéro de dépôt: 85400031.2

(22) Date de dépôt: 08.01.85

(51) Int. Cl.⁴: **B 65 G 47/50**

(30) Priorité: 10.01.84 FR 8400291

(43) Date de publication de la demande: 28.08.85
Bulletin 85/35

(84) Etats contractants désignés: **AT BE CH DE GB IT LI LU NL SE**

(71) Demandeur: **JICE AUTOMATION, Société dite:, route de Bressuire, F-79140 Cirieres (FR)**

(72) Inventeur: **Cousseau, Joseph, Avenue du 25 Août, F-79140 Cerisay (FR)**

(74) Mandataire: **Chevallier, Robert Marie Georges, Cabinet BOETTCHER 23, rue La Boétie, F-75008 Paris (FR)**

(54) Procédé et appareil pour la dérivation à des postes de travail d'articles déplacés le long d'un convoyeur.

(57) Les postes de travail ($T_1$, $T_2$, $T_3$, ...) sont espacés d'un pas (p) qui est un multiple entier du pas constant (p) des taquets d'entraînement (4) du convoyeur (1) à partir d'un point fixe où est installé un détecteur (11) du passage de ces taquets (4), de sorte qu'il suffit, pour faire dériver au moment voulu un taquet (4) vers un poste de travail quelconque, de compter le nombre des taquets (4) qui passent devant le détecteur (11) et de fermer l'aiguillage de dérivation (9) correspondant, le détecteur (11) étant relié à un ordinateur qui assure la gestion pour tous les supports de pièces entraînés par les taquets (4).

1

Procédé et appareil pour la dérivation à des postes de travail d'articles déplacés le long d'un convoyeur.

L'invention a pour objet un procédé pour la dérivation au moment nécessaire, à des postes de travail quelconques déterminés, d'articles qui sont déplacés par un convoyeur sans fin relié à chacun de ces postes de travail par une ligne de dérivation et par une ligne de réinsertion.

On connaît déjà des installations du type évoqué ci-dessus dans lesquels on emploie des moyens d'indexation mécaniques et électriques qui sont placés d'une part sur les supports des articles déplacés par le convoyeur sans fin, d'autre part en amont de l'aiguillage de chaque ligne de dérivation qui conduit à un poste de travail. Chaque poste est identifié par un repère et chaque article doit passer par plusieurs postes pour y subir des opérations successives complémentaires ; ces postes ne sont pas nécessairement à la suite directe les uns des autres.

Quand un article à traiter est accroché à un support entraîné par le convoyeur, on compose avec les moyens mécaniques d'indexation le repère du premier poste où il devra être dérivé pour y subir une opération. Ce repère est lu en amont de l'aiguillage de chaque ligne de dérivation par des moyens mécaniques et électriques. Quand le repère composé initialement correspond au repère du poste, des relais électriques commandent la fermeture de l'aiguillage de dérivation et l'article est dérivé au poste de travail concerné.

Quand l'opération que l'article doit subir à ce poste est terminée, l'opérateur ou l'opératrice présente au poste, efface le repère initialement indexé et compose avec les moyens d'indexation du support le repère du poste suivant où l'article devra être dérivé, après quoi ce support est réintroduit sur le convoyeur par une ligne de réinsertion.

Les moyens mécaniques utilisés pour l'indexation assurent un travail intensif et s'usent rapidement. On trouvera dans le document FR-A- 82 00816 une description

2

de moyens de ce genre, conçus pour être capables d'assurer un service prolongé ; néanmoins, il est souhaitable de disposer de moyens aptes, par nature, à mieux supporter les conditions sévères de travail auxquels ils sont soumis.

On a envisagé de remplacer les moyens mécaniques d'indexation et de lecture, qui impliquent un contact matériel, par des moyens sans contact reposant sur l'induction, l'aimantation, les rayonnements lumineux ou non. Mais, bien que fonctionnant sans contact matériel, ces moyens ne suppriment pas tout contact ; au contraire leur champ d'action est souvent limité, ou sujet à interférences, de sorte qu'il est nécessaire de stabiliser les supports contre tout balancement ou contre toute vibration, au moins au moment de la lecture, en les guidant par des moyens mécaniques matériels d'une précision relativement grande.

L'invention a pour but principal d'apporter un procédé de dérivation, à des postes de travail quelconques prédéterminés d'articles déplacés le long d'un convoyeur sans fin, qui supprime en totalité les moyens d'indexation et de lecture portés par les supports et installés aux postes de travail.

Selon l'invention, il est prévu sur le passage du convoyeur sans fin, de préférence à un point fixe considéré comme origine, un détecteur, de préférence sans contact matériel, qui est influencé par les supports à leur passage ou, de préférence et principalement, quand les supports sont susceptibles d'être retirés du convoyeur sans fin, par un organe même du convoyeur. Comme le plus souvent chaque support est déplacé par l'intermédiaire d'un moyen d'entraînement tel qu'un doigt de poussée ou un taquet d'entraînement, généralement robuste et stable, on choisit de préférence ce doigt ou ce taquet comme organe à détecter. On l'appellera ici organe associé pour signifier qu'il est normalement destiné à être en relation avec un support de pièce à traiter.

3

Quand on dispose les postes de travail à des intervalles déterminés, de préférence des intervalles égaux, le long du convoyeur et quand on monte les taquets d'entraînement avec un pas constant le long du convoyeur, on peut se contenter de compter le nombre des taquets qui passent devant le détecteur pour connaître le chemin parcouru par un taquet et pour savoir quand ce taquet et le support qu'il entraîne arrivent à un poste de travail donné.

Quand un convoyeur est dépourvu, par nature, d'un organe associé, il est presque toujours possible de le munir d'un tel organe en correspondance avec chaque support.

Au passage de chaque organe associé, le détecteur émet une impulsion électrique que l'on dirige vers un ordinateur. Ce dernier est relié aussi aux relais de manoeuvre des aiguillages de dérivation et aux aiguillages de réinsertion de tous les postes de travail.

On utilise le comptage des impulsions produites par le détecteur au passage de chaque organe associé pour faire dériver les supports aux postes de travail où ils doivent s'arrêter, en chargeant l'ordinateur de manoeuvrer convenablement les aiguillages selon un programme approprié qui ne fait pas partie de l'invention.

Si l'on suppose que la distance déterminée qui existe entre les postes est le quadruple, par exemple, de la distance qui sépare les organes associés et quand ces derniers sont espacés de 0,50 m sur le convoyeur, les postes de travail sont séparés par un intervalle de 2 mètres.

En considérant qu'une pièce introduite au point origine du convoyeur doive être dérivée d'abord au poste n° 4, on voit que lorsque le support de cette pièce aura passé devant le détecteur, il suffira de compter seize impulsions (la première produite par l'organe associé au support considéré et les quinze suivantes par les quinze organes qui suivent) pour que ce support arrive au poste n° 4 puisque 16 x 0,5 = 8 m, distance où se trouve ce poste n° 4 après

4

le détecteur unique. C'est le programme de l'ordinateur, qui est à établir en conséquence, qui indique que le premier support est à dériver vers un poste de travail après 16 impulsions, le deuxième après 8 impulsions, par exemple, le troisième support après 4 impulsions, etc...

Ce programme, il est bon de le répéter, ne fait pas partie de l'invention. Celle-ci consiste à définir un procédé et des moyens matériels qui rendent possible l'emploi d'un ordinateur programmé.

Après l'exécution de l'opération prévue à un poste de travail, on peut procéder ensuite selon deux variantes.

Selon la première variante, on munit chaque poste de travail d'un clavier raccordé à l'ordinateur ; l'opérateur ou l'opératrice présente à ce poste compose sur ce clavier le repère du poste de travail suivant où la pièce doit s'arrêter et après réinsertion du support correspondant sur le convoyeur en avant d'un organe de poussée libre de support, le comptage des impulsions qui suivent cette réinsertion permet à l'ordinateur de provoquer la manoeuvre de l'aiguillage convenable quand le support y parvient.

Selon la seconde variante, les postes de travail ne sont pas équipés de clavier ; à chaque support de pièce est associée la liste totale des postes de travail où il devra être dérivé successivement et l'ordinateur commande la manoeuvre des aiguillages, en conséquence, d'après le comptage des impulsions, en relation avec chaque support. Cette manière de faire exige de conserver un ordre immuable des supports et des pièces, non pas sur le convoyeur puisque les supports le quittent et y reviennent, mais dans l'exécution des opérations sur les pièces.

Dans l'un et l'autre cas, l'arrivée d'un support à un poste de travail où il devait s'arrêter et où il ne peut pas être reçu en raison de l'encombrement de la ligne de dérivation, n'est pas une difficulté; il suffit

5

d'adopter alors comme nombre des impulsions à compter le nombre qui correspond à l'exécution d'un tour complet du convoyeur.

On donnera maintenant une description d'un exemple de réalisation d'un appareil à convoyeur et à lignes de dérivation avec aiguillages de dérivation et de réinsertion permettant la mise en oeuvre du procédé de l'invention. On se reportera aux dessins annexés dans lequel :

- la figure 1 est une vue générale de dessus d'un appareil conforme à l'invention,

- la figure 2 est une vue partielle de côté montrant le détecteur d'entrée selon l'invention,

- la figure 3 est une vue partielle analogue à la figure 2 montrant un organe associé passant devant le détecteur d'entrée,

- la figure 4 est une vue partielle montrant un clavier installé à un poste de travail.

Ces figures se rapportent à une installation pour le transport de pièces de vêtement entre des postes de travail $T_1$, $T_2$,... $T_{19}$, $T_{20}$ mais il est entendu que l'invention est indépendante du genre de pièces à traiter, de la nature et du nombre des postes de travail, du type de machine employé à chaque poste.

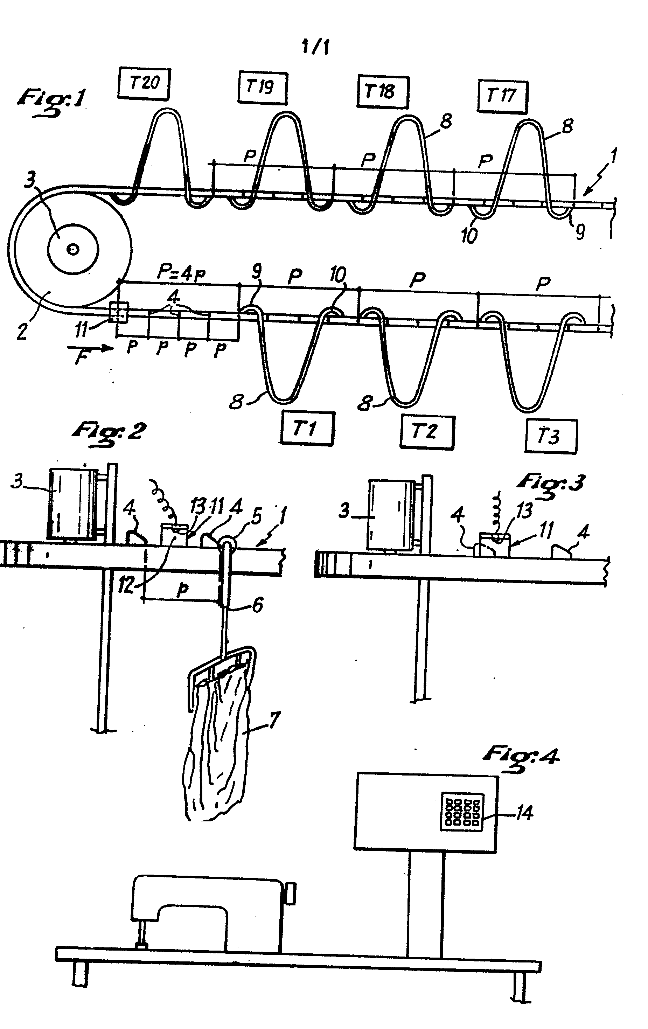

Sur la figure 1 un convoyeur sans fin 1 circule en tournant autour de deux poulies horizontales dont une seule désignée par la référence 2, accouplée à un moteur d'entraînement 3, est visible. Ce convoyeur comprend une chaîne munie de moyens d'entraînement constitués ici par des taquets 4 (figure 2). Ces taquets 4 glissent dans une fente continue limitée par deux parois parallèles sur lesquelles roulent des roulettes 5 qui portent chacune un support 6 auquel sont suspendues des pièces de vêtement 7. Ces dernières subissent plusieurs opérations à certains des postes de travail $T_1$ à $T_{20}$ qui sont disposés le long du convoyeur 1. A cet effet, il existe entre ce dernier et

0153201

6

chaque poste de travail une dérivation qui comprend un aiguillage de dérivation 9 et un aiguillage de réinsertion 10.

Dans le cadre de l'invention, les taquets 4 sont espacés d'un pas $p$ constant ; les postes de travail sont séparés par un intervalle P constant, de sorte qu'il existe un rapport constant p/P. De préférence, ce rapport est un nombre entier. Dans cet exemple les postes de travail $T_1$ à $T_{20}$ sont convenablement installés avec un espacement de 2 m et les roulettes 5 avec leurs supports 6 ont un encombrement tel qu'un intervalle de 0,50 m est admissible entre les taquets 4. Dans ce cas particulier on a donc $P = 4p$.

Le convoyeur 1 circule dans le sens indiqué par une flèche F ; en amont du premier poste de travail $T_1$, il existe un détecteur 11 capable de détecter à coup sûr le passage de chacun des supports 6 ou, lorsque les taquets 4 sont susceptibles d'être dépourvus de leur support 6, de détecter le passage de chaque taquet 4. Ce détecteur 11 est monté à une distance déterminée du premier poste de travail $T_1$, par exemple à une distance $P = 4p$, qui est un multiple entier du pas constant p, en un point considéré comme point/origine.

Par suite des espacements constants p et P expliqués plus haut, quand un premier taquet 4 est détecté par le détecteur 11, il suffit de compter le passage des quatre taquets 4 qui suivent le premier taquet pour savoir que ce premier taquet est arrivé au poste $T_1$, de compter le passage des douze taquets 4 qui suivent le premier taquet pour savoir que ce premier taquet est arrivé au poste $T_3$ etc.. De même, entre deux postes quelconques $T_{17}$ et $T_{19}$ par exemple, il suffit de compter le passage de huit taquets 4 devant le détecteur 11 à partir de l'instant où le support 6 est revenu du poste de travail $T_{17}$ sur le convoyeur 1 pour savoir que ce support est arrivé au poste de travail $T_{19}$. Si on ferme à ce moment l'aiguillage de dérivation, ce support sera dérivé au poste de travail $T_{19}$.

7

Un ordinateur est parfaitement capable d'exploiter ce procédé et de diriger les supports 6 vers les postes de travail en provoquant au moment voulu la manoeuvre des aiguillages de dérivation 9. Par conséquent, selon l'invention, on envoie à un ordinateur les impulsions produites par le détecteur 11 au passage de chaque taquet 4.

Il est important qu'aucune impulsion ne soit omise puisque le procédé repose totalement sur le comptage des impulsions. De plus, comme il est possible que certains supports 6 soient retirés du convoyeur 1 et que des taquets circulent à vide, il est préférable que les impulsions soient produites par les taquets 4 eux-mêmes. Cette disposition comporte un avantage particulier ; les taquets 4 sont courts, robustes, stables, peu enclins à vibrer, par conséquent il est plus sûr qu'ils provoquent de manière certaine une impulsion en passant devant le détecteur 11. Ce dernier est de préférence du type sans contact, réalisé comme un pontet 12 qui enjambe la fente dans laquelle coulissent les taquets 4, en laissant la place nécessaire au passage des roulettes 5. La face intérieure supérieure du pontet 12 est munie d'un détecteur inductif 13 qui est relié, de façon connue en soi, à des circuits aboutissant à un ordinateur (non représenté) de sorte que celui-ci reçoit une impulsion à chaque passage d'un taquet 4.

Après l'exécution d'une opération à un poste de travail, le support 6 est réintroduit sur le convoyeur 1, par l'aiguillage de réinsertion 10, juste en avant d'un taquet libre qui arrive. Des relais assurent automatiquement cette réinsertion, ainsi qu'il est connu.

Dans le cadre de l'invention, la nouvelle destination du support 6 qui va être réintroduit est indiquée par la personne présente au poste de travail. A cet effet, chaque poste $T_1$..,$T_{20}$ est équipé d'un clavier 14 relié à l'ordinateur, qui permet d'introduire dans la mémoire de ce dernier, le repère du poste suivant. Les relais de manoeuvre

0153201

8

de l'aiguillage de réinsertion sont reliés aussi à l'ordinateur si bien que, après comptage du nombre convenable d'impulsions reçues du détecteur 11, l'ordinateur provoque la manoeuvre de l'aiguillage de dérivation vers le poste de travail prévu, où arrive à ce moment le taquet 4 considéré.

Selon une variante du procédé de l'invention, on pourrait supprimer les claviers 14 des postes de travail, à condition d'introduire dès le début dans la mémoire de l'ordinateur les repères des postes de travail où chaque support doit s'arrêter successivement. Ceci implique naturellement qu'un ordre rigoureux soit conservé constamment dans le déplacement des supports 6.

Dans les deux cas, quand un poste de travail quelconque, $T_3$ par exemple, est encombré et ne peut pas recevoir le support 6 qui arrive, le relais de l'aiguillage de dérivation correspondant ne fonctionne pas et le support 6 continue avec son taquet 4 sur le convoyeur 1 pour exécuter un tour complet, ce qui se traduit par le comptage des impulsions signifiant l'exécution d'un tour, ce que l'ordinateur contrôle sans difficulté, les longueurs mortes en demi-cercle des poulies étant prise en compte une fois pour toutes.

Ainsi qu'on vient de le montrer, le procédé de l'invention, qui repose sur le comptage des impulsions pour diriger les supports 6 vers les postes de travail, permet de supprimer tous les détecteurs, à l'exception du détecteur 11.

Dans ce qui précède, on a supposé, pour la facilité de l'exposé, qu'il existe un rapport constant entre le pas constant p des organes associés et l'espacement P des postes de travail que l'on a supposé constant également. La constance de l'espacement P des postes de travail n'est pas obligatoire. Elle facilite le fonctionnement mais lorsque les postes de travail sont espacés par des distances diverses $P_1$, $P_2$, $P_3$, par suite de leur encombrement propre, le procédé de l'invention reste applicable. Il suffit de connaître les rapports qui existent entre p et $P_1$, $P_2$, $P_3$ pour que le

9

programme de l'ordinateur en tienne compte dans le comptage des impulsions. La seule nécessité est que ces rapports soient des nombres entiers, ce que l'on réalise facilement en disposant les postes de travail $T_1$, $T_2$..., $T_{19}$, $T_{20}$ autour du convoyeur et en choisissant comme point fixe pour l'emplacement du détecteur 11 un point espacé en amont du premier poste de travail $T_1$ par un multiple entier du pas p.

10

REVENDICATIONS

1. Procédé pour la dérivation de supports d'articles à traiter circulant sur un convoyeur sans fin vers des postes de travail disposés avec des espacements connus le long de ce convoyeur, ce dernier ayant des organes associés à ces supports espacés d'un pas p constant, des aiguillages de dérivation et des aiguillages de réinsertion étant disposés entre le convoyeur et chaque poste de travail, caractérisé en ce qu'on dispose les postes de travail à des espacements qui sont dans un rapport s'exprimant par un nombre entier avec le pas p des organes associés, on choisit un point fixe considéré comme origine sur le convoyeur en amont du premier poste de travail à une distance qui est un multiple entier du pas p, on détermine le rapport entre la distance séparant de ce point fixe un poste de travail quelconque déterminé, on compte en fonction de ce rapport à partir du passage à ce point fixe d'un organe associé à un support déterminé le nombre d'organes associés qui passent à ce même point fixe et on provoque d'après ce comptage la manoeuvre de l'aiguillage de dérivation dudit poste de travail déterminé.

2. Procédé selon la revendication 1, caractérisé en ce qu'on donne aux espacements P des postes de travail une valeur constante.

3. Procédé selon la revendication 1, caractérisé en ce qu'on compte le nombre d'organes associés qui passent au point fixe en émettant des impulsions qui sont envoyées à un ordinateur.

4. Procédé selon la revendication 3, caractérisé en ce qu'on utilise à chaque poste de travail un clavier relié à l'ordinateur et on transmet à ce dernier à l'aide de ce clavier la distance à laquelle se trouve d'un poste de travail déterminé, le poste de travail suivant où devra être dérivé un support quittant par l'aiguillage de réinsertion sur le convoyeur ledit poste de travail déterminé.

5. Procédé selon l'une des revendications 1 à 4, caractérisé en ce qu'on prend comme organes associés les moyens

11

d'entraînement faisant partie du convoyeur.

6. Procédé selon la revendication 1, caractérisé en ce que, lorsque ledit poste de travail déterminé ne peut pas recevoir ledit support déterminé, on compte au même point fixe un nombre de passages d'organes associés qui correspond à un tour complet du convoyeur effectué par ledit support déterminé.

7. Appareil pour la dérivation de supports (6) d'articles (7) à traiter circulant sur un convoyeur sans fin (1) vers des postes de travail ($T_1$, $T_2$, ...) disposés avec des espacements (P) connus le long de ce convoyeur (1), ce dernier ayant des organes (4) associés à ces supports (6) espacés d'un pas (p) constant, des aiguillages de dérivation (9) et des aiguillages de réinsertion (10) étant disposés entre le convoyeur (1) et chaque poste de travail ($T_1$, $T_2$...), caractérisé en ce que les postes de travail ($T_1$, $T_2$...) sont disposés avec un espacement (P) qui est un multiple entier du pas constant (p), tandis qu'à un point fixe situé en amont du premier poste de travail ($T_1$) à une distance qui est un multiple entier du pas constant (p) est monté un détecteur (11) émettant un signal au passage de chacun des organes associés (4).

8. Appareil selon la revendication 7, caractérisé en ce que le détecteur (11) est relié à un ordinateur qui est également relié aux aiguillages de dérivation (9) pour commander les aiguilles de dérivation (9) en fonction des signaux reçus du détecteur (11).

9. Appareil selon la revendication 8, caractérisé en ce que chaque poste de travail ($T_1$, $T_2$...) est équipé d'un clavier (14) relié à l'ordinateur et l'aiguillage de réinsertion (10) de chaque poste de travail ($T_1$, $T_2$...) est relié aussi à cet ordinateur.

10. Appareil selon la revendication 7, caractérisé en ce que le détecteur (11) est du type sans contact matériel, de préférence du type inductif.

11. Appareil selon la revendication 7, caractérisé en ce que les organes associés sont constitués par les moyens d'entraînement (4) faisant partie du convoyeur (1) et servant à entraîner les supports (6).

0153201

1/1

Fig.1

T20  T19  T18  T17

P = 4p

T1  T2  T3

Fig.2

Fig.3

Fig.4